# EUROPÄISCHE PATENTSCHRIFT

(11) **EP 3 798 274 B1**
(45) Veröffentlichungstag und Bekanntmachung des Hinweises auf die Patenterteilung: **08.11.2023**
(21) Anmeldenummer: 20194381.8
(22) Anmeldetag: 03.09.2020
(51) Int. Cl.: C09D 5/18, C09K 21/14

(54) **VERWENDUNG EINES FLAMMSCHUTZMITTELS, ANORDNUNG AUS EINEM FLAMMSCHUTZMITTEL UND EINEM TRÄGERSTOFF SOWIE VERFAHREN ZUM HERSTELLEN EINES FLAMMSCHUTZMITTELS**
USE OF A FLAME RETARDANT, ARRANGEMENT COMPRISING A FLAME RETARDANT AND A CARRIER AND METHOD FOR PREPARING A FLAME RETARDANT
UTILISATION D'UN PRODUIT IGNIFUGE, AGENCEMENT D'UN PRODUIT IGNIFUGE ET D'UNE CHARGE, ET PROCÉDÉ DE FABRICATION D'UN PRODUIT IGNIFUGE

(30) Priorität: 20.09.2019 DE 102019006652
(43) Veröffentlichungstag der Anmeldung: 31.03.2021
(73) Patentinhaber: Aero-Comfort-Tex GmbH Bettwaren mit Komfort, 6440 Brunnen (CH)
(72) Erfinder: Metz, Paul-Friedrich, 57334 Bad Laasphe (DE)
(74) Vertreter: Zeitler Volpert Kandlbinder Patentanwälte Partnerschaft mbB

(56) Entgegenhaltungen:
- WO-A1-2011/106816
- WO-A1-2019/053713
- CN-A- 108 424 435
- DE-A1- 2 045 944

## Beschreibung

Die Erfindung bezieht sich auf eine Verwendung von Keratin-Hydrolysat als Flammschutzmittel, das als Überzug oder Beschichtung auf einen Trägerstoff aufbringbar, insbesondere als gelöstes Pulver auf eine Oberfläche des Trägerstoffs aufsprühbar ist. Die Erfindung bezieht sich auch auf eine Anordnung aus einem Flammschutzmittel und einem Trägerstoff sowie auf ein Verfahren zum Herstellen eines solchen Flammschutzmittels.

Flammschutzmittel lassen sich grob in vier Kategorien einteilen, nämlich in additive Flammschutzmittel, reaktive Flammschutzmittel, Mittel mit inhärentem Flammschutz und Flammschutzmittel als Überzug oder Beschichtung. Additive Flammschutzmittel sind solche, bei denen die einen Brand hemmenden Stoffe in die brennbaren Stoffe als Zusatzstoffe gewissermaßen eingearbeitet sind. Bei den reaktiven Flammschutzmitteln sind die einen Brand hemmenden Stoffe oder Substanzen selbst Bestandteil des Materials. Bei inhärenten Flammschutzmitteln ist das Material selbst flammwidrig. Bei Flammschutzmitteln als Überzug oder Beschichtung sind die einen Brand hemmenden Stoffe von außen als Überzug oder Beschichtung auf einen Trägerstoff aufgebracht. Die vorliegende Erfindung bezieht sich insbesondere auf die vorstehend erläuterten Kategorien eins, zwei und vier.

Nach Substanzgruppen geordnet kommen folgende Flammschutzmittel bezogen auf alle Anwendungsbereiche zum Einsatz:
Bromierte Flammschutzmittel
Flammschutzmittel auf der Basis von organischen Phosphorverbindungen Chlorierte Flammschutzmittel
Flammschutzmittel auf der Basis von Antimon-Oxiden
Flammschutzmittel auf Basis von Aluminiumhydroxiden, Magnesiumhydroxiden
und zu einem geringen Teil sonstige Flammschutzmittel.

In der DE 2 045 944 A1 sind Methoden zum Abtrennen von Keratin aus natürlichen, keratinhatigen Materialien beschrieben.

Aus der CN 108 424 435 A ist die Herstellung eines Flammschutzmittels bekannt, das als Überzug oder Beschichtung auf einen Trägerstoff aufbringbar ist. Ferner offenbart die WO 2019/053713A1 die Herstellung eines Flammschutzmittels enthaltend Keratin, Melamin und Phosphor-haltige Substanzen sowie dessen Verwendung.

Neben der positiven Eigenschaft des Flamm- und/oder Brandschutzes haben einige der vorgenannten Flammschutzmittel jedoch auch problematische Umwelt- und die Gesundheit beeinträchtigende Eigenschaften. Besonders halogenierte Flammschutzmittel können gesundheits- und umweltgefährliche Eigenschaften sowie eine hohe Persistenz aufweisen und sich beständig in der Umwelt anreichern. Manche Flammschutzmittel können korrosive oder hochgiftige Brandgase bzw. Brandfolgeprodukte verursachen, wenn der Brand nicht verhindert werden kann. Hierzu zählen beispielsweise das giftige Gas Formaldehyd und die mögliche Dioxinund Furanbildung aus polybromierten Diphenylethern (PBDE). Andere Flammschutzmittel wirken sich reizend auf Haut, Augen und Atemwege aus.

Der Erfindung liegt die Aufgabe zugrunde, ein Flammschutzmittel zu schaffen, das verträglicher für Mensch und Umwelt ist. Der Erfindung liegt auch die Aufgabe zugrunde, eine Anordnung aus einem Flammschutzmittel und einem Trägerstoff sowie ein Verfahren zum Herstellen eines solchen Flammschutzmittels anzugeben. Diese Aufgabe wird erfindungsgemäß durch eine Verwendung von Keratin-Hydrolysat als Flammschutzmittel mit den Merkmalen des Patentanspruchs 1, eine Anordnung mit den Merkmalen des Patentanspruchs 8 und ein Verfahren mit den Merkmalen des Patentanspruchs 9 gelöst. Vorteilhafte Ausgestaltungen der Erfindung sind in den abhängigen Ansprüchen beschrieben.

Erfindungsgemäß ist eine Verwendung von Keratin-Hydrolysat als Flammschutzmittel vorgesehen, welches als Überzug oder Beschichtung auf einen Trägerstoff aufbringbar, insbesondere als gelöstes Pulver auf eine Oberfläche des Trägerstoffs aufsprühbar ist, wobei das Flammschutzmittel aus Keratin-Hydrolysat besteht, welches wesentlich aus Polypeptiden besteht, die aus Keratinmaterialien gewonnen sind. Bei den Keratinmaterialien handelt es sich um nachwachsende Rohstoffe. Diese sind besonders umweltverträglich einsetzbar, wie nachstehend noch erläutert wird. Sie sind ferner gesundheitlich unbedenklich. Es hat sich nun herausgestellt, dass derartige Materialien sehr vorteilhaft auch als Flammschutzmittel eingesetzt werden können. Der Grund für die Schwerentflammbarkeit von Keratin liegt einerseits in einem hohen Gehalt an Stickstoff und andererseits an einem gleichzeitig hohen Sauerstoffindex. Ein weiterer, die Schwerentflammbarkeit stützender Effekt betrifft die sogenannte Intumeszenz, nämlich das Quellen und Schäumen bzw. Aufblähen des Keratinmaterials insbesondere bei Hitzeeinwirkung. Dadurch kann die für ein Entflammen oder Brennen erforderliche Sauerstoffzufuhr zu dem brennenden Stoff unterbrochen oder abgeschwächt sein.

Vorteilhafterweise ist das Keratinmaterial aus Federn, vorzugsweise Vogelfedern, besonders bevorzugt Gefieder des Land- und/oder Wassergeflügels wie Gänse- oder Entenfedern, Haaren, Hufen, Hörnern und/oder Schuppen gebildet, wobei die Vogelfedern besonders bevorzugt aus verbrauchten Bettwaren und/oder Bekleidungsfüllungen stammen. Jedes Jahr fallen allein in Deutschland etwa 1000 t, weltweit etwa 8 Millionen t sogenannte Abfallfedern an, die bislang keinem sinnvollen nachhaltigen Weiterverwendungszweck als der Deponierung oder Verbrennung zugeführt werden können. Insofern stellt der Einsatz eines solchen Keratinmaterials eine umweltschonende und nutzbringende Weiterverwendung bzw. Entsorgung derartiger Abfallfedern dar. Letztere können damit wertschöpfend aufgearbeitet und eingesetzt werden. Die Herstellung eines solchen Flammschutzmittels ist daher besonders umweltverträglich möglich. Diese Weiterbildung kann auch dazu dienen, die Vorschriften des Abfallwirtschaftsgesetzes einzuhalten und die entsprechenden Verwaltungsvorschriften umzusetzen. Die vorgenannten Gänse- und Entenfedern fallen ebenso wie beispielsweise Hühnerfedern beim Landgeflügel bei der Nutztierhaltung an, also bei Tieren, die zur Ernährung des Menschen ohnehin gehalten und gezüchtet werden. Sie sind als nachwachsender Rohstoff insofern Neben- und Abfallprodukt.

Gemäß einer Weiterbildung der Erfindung basieren die gewonnenen Polypeptide auf Keratinmaterialien, die in Wasser oder in einer wässrigen Lösung aus Natriumsulfit, Natriumhydrogensulfit, Natriumsulfat, Natriumhydroxid mittels eines Autoklaven bei Temperaturen zwischen 150 °C und 220 °C, bevorzugt zwischen 160 °C und 200 °C, hydrolysiert sind. Eine solche Hydrolyse, bei der das Keratinmaterial durch Einwirkung von Wasser oder einer der vorgenannten wässrigen Lösungen gespalten wird, ist technisch relativ einfach und auch wegen der mäßigen Temperaturbereiche kostengünstig durchführbar.

Gemäß einer anderen Weiterbildung enthält das Flammschutzmittel als Überzug oder Beschichtung 0,5 bis 95 Gew.-% Polypeptide. Damit kann das erfindungsgemäße Flammschutzmittel sehr weitgehend aus einem nachwachsenden und damit umweltverträglichen Rohstoff bestehen.

Vorteilhafterweise ist das als Pulver vorliegende Flammschutzmittel durch Eindampfen des Hydrolysats hergestellt. Ein solcher Eindampf- oder Abdampfschritt kann mit bereits auf dem Markt befindlichen verfahrenstechnischen Apparaten relativ schnell und kostengünstig erfolgen.

Erfindungsgemäß ist die Anordnung aus einem Flammschutzmittel und einem Trägerstoff durch einen Trägerstoff gekennzeichnet, welcher aus einem Holzwerkstoff, Holzfaserwerkstoff, Baustoff, Bauprodukt, Textilwerkstoff oder Textilien gebildet ist. Damit ist das oben beschriebene Flammschutzmittel auf zahlreichen Stoffen oder in Verbindung mit zahlreichen Stoffen und Produkten einsetzbar, wobei die vorgenannten Stoffe, Werkstoffe und Produkte hier in einem umfassenden Sinne, also sehr breit verstanden werden sollen wie nachstehend noch erläutert wird.

Ferner erfindungsgemäß umfasst das Verfahren zum Herstellen eines vorgenannten Flammschutzmittels folgende Schritte:
(a) Vermahlen des Keratinmaterials auf eine Partikelgröße von etwa 200 µm bis etwa 500 µm;
(b) Vermischen des gemäß Schritt (a) vermahlenen Keratinmaterials mit Wasser oder einer wässrigen Lösung aus Natriumsulfit, Natriumhydrogensulfit, Natriumsulfat, Natriumhydroxid;
(c) thermisches Hydrolysieren des Gemisches gemäß Schritt (b) in einem Autoklaven bei Temperaturen zwischen 150 °C und 220 °C, bevorzugt zwischen 160 °C und 200 °C;
(d) Abkühlen des gemäß Schritt (c) hergestellten Hydrolysats;
(e) Neutralisieren des gemäß Schritt (d) abgekühlten Hydrolysats mit einer Säure, insbesondere Salzsäure, und gegebenenfalls Abtrennen von noch vorhandenen, nicht hydrolysierten Feststoffen durch Filtration. Ein derartiges Verfahren kann besonders umweltverträglich durchgeführt werden. Zudem ist es, wie zuvor erwähnt, damit möglich, auch Abfallprodukte, nämlich verbrauchte Federn wie Abfallfedern, einer sinnvollen Verwendung zuzuführen.

Gemäß einer vorteilhaften Weiterbildung ist das Verfahren ferner gekennzeichnet durch den weiteren Schritt:
(f) Eindampfen des gemäß Schritt (e) hergestellten Hydrolysats zum Herstellen eines Pulvers. Dadurch kann das erfindungsgemäße Flammschutzmittel einerseits als Überzug oder Beschichtung, andererseits als gelöstes Pulver auf einen Trägerstoff bzw. auf eine Oberfläche des Trägerstoffs aufgebracht, insbesondere aufgesprüht werden.

Ausführungsbeispiele des Erfindungsgegenstandes werden nachfolgend auch anhand der Zeichnungen näher erläutert, wobei alle beschriebenen Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische Ansicht der Ergebnisse von Brandversuchen mit einem Baumwollstoff jeweils mit und ohne Keratin und einem Inlettstoff jeweils mit und ohne Keratin; und
- Fig. 2: eine schematische Ansicht der Ergebnisse von Brandversuchen mit Fichtenholz mit bzw. ohne Keratin.

Wie zuvor bereits angedeutet umfasst die Erfindung letztlich drei Aspekte, nämlich einerseits eine Verwendung von Keratin-Hydrolysat als Flammschutzmittel, andererseits eine Anordnung aus einem Flammschutzmittel und einem Trägerstoff bereitzustellen und schließlich ein Verfahren zum Herstellen eines (solchen) Flammschutzmittels anzugeben.

Das als Überzug oder Beschichtung auf einen Trägerstoff aufbringbare, insbesondere als Pulver in gelöster Form auf eine Oberfläche des Trägerstoffs aufsprühbare Flammschutzmittel enthält Keratin-Hydrolysat, welches wesentlich aus Polypeptiden besteht. Diese Polypeptide sind aus Keratinmaterialien, vorzugsweise Vogelfedern, besonders bevorzugt Gefieder des Land- und/oder Wassergeflügels wie Gänse- oder Entenfedern, Haaren, Hufen, Hörnern und/oder Schuppen gewonnen. Gemäß einer besonders bevorzugten Ausführungsform der Erfindung stammen die Vogelfedern teilweise oder vollständig aus verbrauchten Bettwaren und/oder Bekleidungsfüllungen und bilden damit sogenannte Abfallfedern.

Der Trägerstoff kann in weiten Grenzen variieren. So kann dieser Holz oder ein Holzwerkstoff oder ein Holzfaserwerkstoff sein oder dessen/deren Teile sein und damit auch einzelne Holzspäne oder Holzfasern umfassen. Ferner kann der Träger auch ein Baustoff oder Bauwerkstoff, insbesondere ein Baumaterial, wie zum Beispiel ein Putz, oder ein Bauprodukt wie eine Gebäudeplatte, eine Platte für den Gebäude-Innenausbau oder für die Gebäudefassade, sein und beispielsweise Dämmstoffplatten, auch Naturdämmstoffplatten oder deren Teile umfassen. Der Trägerstoff kann auch einen Textilwerkstoff oder Textilien und auch dessen/deren Teile umfassen, so zum Beispiel Heimtextilien wie Bettwaren, Gardinen, Teppichböden, Dekostoffe, oder Bekleidungs- und Funktionstextilien. Der Textilwerkstoff kann auch Böden, Decken-, Wandverkleidungen, Sitze und/oder Auskleidungen im Fahrzeugbereich, insbesondere im Kfz-Bereich und im Flugzeugbau, umfassen.

Die gewonnenen Polypeptide basieren auf Keratinmaterialien, die in Wasser oder in einer wässrigen Lösung aus Natriumsulfit, Natriumhydrogensulfit, Natriumsulfat, Natriumhydroxid, Calciumhydroxid oder anderen Alkalien mittels eines Autoklaven bei Temperaturen zwischen 150 °C und 220 °C, bevorzugt zwischen 160 °C und 200 °C, hydrolysiert sind.

Das Flammschutzmittel als Überzug oder Beschichtung enthält 0,5 bis 95 Gew.-% Polypeptide, während das als Pulver vorliegende Flammschutzmittel durch Eindampfen des Hydrolysats hergestellt ist.

Das erfindungsgemäße Verfahren zum Herstellen eines (vorgenannten) Flammschutzmittels umfasst folgende Schritte:
(a) Vermahlen des Keratinmaterials auf eine Partikelgröße von etwa 200 µm bis etwa 500 µm;
(b) Vermischen des gemäß Schritt (a) vermahlenen Keratinmaterials mit Wasser oder einer wässrigen Lösung aus Natriumsulfit, Natriumhydrogensulfit, Natriumsulfat, Natriumhydroxid;
(c) thermisches Hydrolysieren des Gemisches gemäß Schritt (b) in einem Autoklaven bei Temperaturen zwischen 150 °C und 220 °C, bevorzugt zwischen 160 °C und 200 °C;
(d) Abkühlen des gemäß Schritt (c) hergestellten Hydrolysats;
(e) Neutralisieren des gemäß Schritt (d) abgekühlten Hydrolysats mit einer Säure, zum Beispiel Salzsäure, und gegebenenfalls Abtrennen von noch vorhandenen, nicht hydrolysierten Feststoffen durch Filtration.

Das gemäß Schritt (e) vorliegende Hydrolysat ist bereits für die Flammenschutzimprägnierung durch Tränk- oder Sprühverfahren geeignet. Gemäß einer bevorzugten Ausführungsform umfasst das erfindungsgemäße Verfahren ferner den weiteren Schritt:
(f) Eindampfen des gemäß Schritt (e) hergestellten Hydrolysats.

Auf diese Weise ist es möglich, ein Keratinpulver herzustellen, das beispielsweise in gelöster Form auf die Oberfläche eines der genannten Trägerstoffe oder deren Teile aufgesprüht oder an dieser angelagert werden kann.

Insbesondere aber nicht ausschließlich ist die Erfindung dafür vorgesehen,
- das Keratinhydrolysat-Pulver in gelöster Form auf Gebäudeflächen aufzusprühen oder auf diesen abzulagern;
- das Keratinhydrolysat-Pulver intensiv mit einem oder mehreren Polymermaterialien zwecks Herstellung eines flammgeschützten Isoliermaterials für Gebäude zu vermischen;
- das Keratinhydrolysat-Pulver in gelöster Form auf Teppichoberflächen, die aus und mit synthetischen Fasern hergestellt sind, aufzusprühen oder auf diesen abzulagern;
- das Flammschutzmittel zur Beschichtung von Textilfasern als Schicht oder Film aufzubringen, um die Fasern vor offener Flamme zu schützen;
- das Flammschutzmittel zur Beschichtung von Holzoberflächen als Film aufzubringen, um diese gegen offenes Feuer zu schützen.

Ferner können saugfähige Substanzen, wie Holzspäne beispielsweise zur Herstellung von Holzspanplatten, Heimtextilien wie zum Beispiel Bettwaren, Gardinen, Teppichböden, Dekostoffe direkt mit wässrigem Keratin-Hydrolysat getränkt oder besprüht werden. Ebenso können Bekleidungs- und Funktionstextilien mit Keratin-Hydrolysat behandelt werden.

### Anwendun-gsbeispiel für Textilien

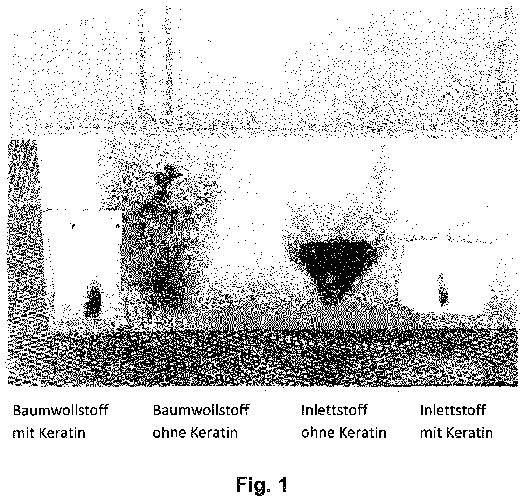

Das Textilprodukt wird bei Raumtemperatur in eine Lösung mit 0,5 bis 20 Gew.-%, bevorzugt 12 bis 15 Gew.-%, Keratin-Hydrolysat für einen Zeitraum von 1 bis 20 Minuten, bevorzugt 10 bis 15 Minuten, eingelegt, dann ausgepresst und getrocknet. Es wurden Brandversuche sowohl an einem Baumwollstoff als auch an einem Inlettstoff durchgeführt. Die Ergebnisse sind in Fig. 1 dargestellt, wobei die Baumwollstoffe in der linken Hälfte der Figur und die Inlettstoffe in der rechten Hälfte von Fig. 1 gezeigt sind.

Die einander gegenüber gestellten Stoffe, welche jeweils mit Keratin-Hydrolysat behandelt und jeweils unbehandelt gezeigt sind, verdeutlichen anschaulich die unterschiedlichen Brandverhalten.

Beim in der linken Hälfte der Fig. 1 dargestellten Baumwollstoff zeigen sich bei dem mit Keratin-Hydrolysat behandelten Stoff nur punktuell Brandspuren, während der unbehandelte Baumwollstoff nahezu vollständig angegriffen ist.

Auch bei dem in der rechten Hälfte von Fig. 1 1 gezeigten Inlettstoff zeigen sich bei dem mit Keratin-Hydrolysat behandelten Stoff lediglich punktuell geringe Brandspuren, während der unbehandelte Inlettstoff nahezu vollständig abgebrannt ist.

### Anwendungsbeispiel für Holz

So können zum Beispiel Holzschnitzel bei Raumtemperatur in eine Lösung mit 0,5 bis 20 Gew.-%, bevorzugt 12 bis 15 Gew.-%, Keratin-Hydrolysat für einen Zeitraum von 1 bis 20 Minuten, bevorzugt 10 bis 15 Minuten, eingelegt, dann getrocknet und weiterverarbeitet werden.

Insbesondere können mit dem erfindungsgemäßen Flammschutzmittel die Brandschutzeigenschaften von Holzwerkstoffen, wie zum Beispiel auch von Holzfaserdämmplatten, verbessert werden.

Vorteilhaft ist dabei ferner, dass das Protein die Verklebung der Holzfaserdämmplatten unterstützt, so dass auf das bisher übliche Abbinden unter Verwendung von Polyurethanharzen teilweise verzichtet und die Ökobilanz der Holzfaserdämmplatten weiter verbessert werden kann. Aufgrund des verbesserten Brand- und Glimmverhaltens solcher Dämmplatten ist es möglich, diese sehr weitgehend sowohl bei Neubauvorhaben als auch bei der Bausanierung einzusetzen. Die Verwendung solcher Dämmplatten kann auch beim Recycling Vorteile haben, die sich bei der Entsorgung derartiger Platten ergeben. Wie erwähnt kann durch die Klebewirkung des Keratins eine Reduzierung des Bedarfs an Polyurethanharzen bei der Herstellung der Dämmplatten erreicht werden. Insofern können nachwachsende Rohstoffe bisher zum Einsatz kommende Chemikalien ersetzen. Das erfindungsgemäße Verfahren ermöglicht eine umweltschonendere Abfallverwertung, da verbrauchte Federn ansonsten unter Energieeinsatz der Sondermüllverbrennung zufallen oder deponiert werden müssen.

Letztlich kann das erfindungsgemäße Flammschutzmittel das Holz bzw. dessen Bestandteile mit Keratin-Hydrolysat imprägnieren, wobei die eingebrachten Keratinpartikel die Entflammbarkeit des Holzes herabsetzen und das Brand- und Glimmverhalten desselben verbessern.

Versuche haben die Wirksamkeit Keratin-Hydrolysat basierter Flammschutzmittel als Imprägnierung für den natürlichen Rohstoff Holz gezeigt. Das mittels Hydrolyse erzeugte Keratin-Hydrolysat wurde als Lösung auf Holzproben aufgebracht. Dazu kann ein Tränkungsverfahren zur Anwendung kommen, mittels dem die Holzproben schnell und effizient getränkt werden können. Während unbehandelte Holzproben vollständig abbrannten, sind die behandelten Holzproben selbstverlöschend. Außerdem zeigten die behandelten Holzproben ein besseres Glimmverhalten. Schließlich zeigten Keratin imprägnierte Holzproben eine größere Stabilität und einen größeren Zusammenhalt der einzelnen Fasern, was auf eine unterstützende Wirkung beim Verkleben der Holzspäne hindeutet.

Dazu wurden Brandprüfungen an Keratin-Hydrolysat imprägnierten Holzproben und unbehandelten Holzproben, jeweils mit einer Länge von 100 mm, durchgeführt. Vorgefertigte Prüfmuster oder -proben wurden vertikal angeordnet und am unteren Ende entzündet. Die Versuche ergaben, dass die unbehandelten Holzproben über ihre Länge von 100 mm vollständig selbstständig abbrannten. Die mit Keratin-Hydrolysat behandelten Holzproben brannten nach dem Entzünden nur noch einen kurzen Zeitraum, die abgebrannte Strecke betrug unter 10 mm. Die behandelten Holzproben waren selbstverlöschend.

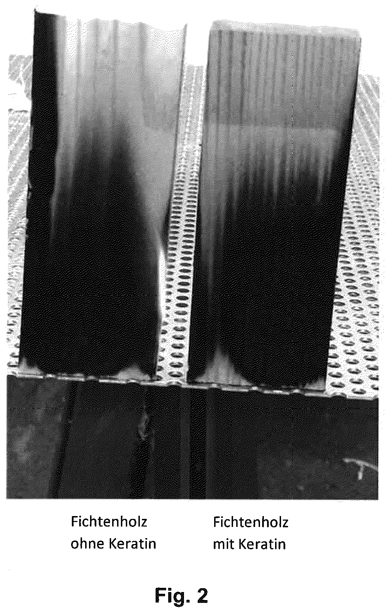

Dies verdeutlicht Fig.2, in der Proben aus Fichtenholz einmal mit Keratin behandelt (in Fig. 2 rechts dargestellt), zum anderen unbehandelt (in Fig. 2 links dargestellt) gezeigt sind.

Auch hier lassen sich die unterschiedlichen Brandverhalten deutlich erkennen. Während links die unbehandelte Holzprobe über ihre gesamte Länge sehr deutliche Brandspuren und ein dauerhaftes Brennen zeigt, lässt die mit Keratin-Hydrolysat behandelte Holzprobe an ihrer Oberfläche zwar auch Brandspuren erkennen, die sich jedoch nicht über die gesamte Länge der Probe erstrecken, wodurch sich erkennen läßt, dass diese Probe selbstverlöschend ist.

Damit lässt sich feststellen, dass die mit dem erfindungsgemäßen Flammschutzmittel behandelten, imprägnierten Holzproben ein deutlich verbessertes Brandverhalten zeigten.

### Anwendungsbeispiel für Kunststoffe

Keratinhydrolysat-Pulver wird mit geschmolzenen Polymermaterialien im Mischungsverhältnis 1:5 bis 1:50, bevorzugt 1:10 bis 1:15 gemischt.

Damit wurde ein für Mensch und Umwelt verträgliches Flammschutzmittel und eine Anordnung aus einem solchen Flammschutzmittel und einem Trägerstoff geschaffen sowie ein Verfahren zum Herstellen eines solchen Flammschutzmittels bereitgestellt.

## Patentansprüche

1. Verwendung von Keratin-Hydrolysat als Flammschutzmittel,
das als Überzug oder Beschichtung auf einen Trägerstoff aufbringbar, insbesondere als Pulver in gelöster Form auf eine Oberfläche des Trägerstoffs aufsprühbar ist,
wobei das Flammschutzmittel aus Keratin-Hydrolysat besteht, welches wesentlich aus Polypeptiden besteht, die aus Keratinmaterialien gewonnen sind.

2. Verwendung von Keratin-Hydrolysat als Flammschutzmittel nach Anspruch 1, **dadurch gekennzeichnet, dass** das Keratinmaterial aus Federn, vorzugsweise Vogelfedern, besonders bevorzugt Gefieder des Land- und/oder Wassergeflügels wie Gänse- oder Entenfedern, Haaren, Hufen, Hörnern und/oder Schuppen gebildet ist.

3. Verwendung von Keratin-Hydrolysat als Flammschutzmittel nach Anspruch 2, **dadurch gekennzeichnet, dass** die Vogelfedern aus verbrauchten Bettwaren und/oder Bekleidungsfüllungen stammen.

4. Verwendung von Keratin-Hydrolysat als Flammschutzmittel nach einem der Ansprüche 1 bis 3, **dadurch gekennzeichnet, dass** die gewonnenen Polypeptide auf Keratinmaterialien basieren, die in Wasser mittels eines Autoklaven bei Temperaturen zwischen 150 °C und 220 °C, bevorzugt zwischen 160 °C und 200 °C, hydrolysiert sind.

5. Verwendung von Keratin-Hydrolysat als Flammschutzmittel nach einem der Ansprüche 1 bis 3, **dadurch gekennzeichnet, dass** die gewonnenen Polypeptide auf Keratinmaterialien basieren, die in einer wässrigen Lösung aus Natriumsulfit, Natriumhydrogensulfit, Natriumsulfat, Natriumhydroxid mittels eines Autoklaven bei Temperaturen zwischen 150 °C und 220 °C, bevorzugt zwischen 160 °C und 200 °C, hydrolysiert sind.

6. Verwendung von Keratin-Hydrolysat als Flammschutzmittel nach einem der vorhergehenden Ansprüche, **dadurch gekennzeichnet, dass** das Flammschutzmittel als Überzug oder Beschichtung 0,5 bis 95 Gew.-% Polypeptide enthält.

7. Verwendung von Keratin-Hydrolysat als Flammschutzmittel nach Anspruch 4 oder 5, **dadurch gekennzeichnet, dass** das als Pulver vorliegende Flammschutzmittel durch Eindampfen des Hydrolysats hergestellt ist.

8. Anordnung aus einem Flammschutzmittel nach einem der vorhergehenden Ansprüche und einem Trägerstoff, welcher aus einem Holzwerkstoff, Holzfaserwerkstoff, Baustoff, Bauprodukt, Textilwerkstoff oder Textilien gebildet ist.

9. Verfahren zum Herstellen eines Flammschutzmittels nach einem der vorhergehenden Ansprüche, **gekennzeichnet durch** folgende Schritte:
(a) Vermahlen des Keratinmaterials auf eine Partikelgröße von etwa 200 µm bis etwa 500 µm;
(b) Vermischen des gemäß Schritt (a) vermahlenen Keratinmaterials mit Wasser oder einer wässrigen Lösung aus Natriumsulfit, Natriumhydrogensulfit, Natriumsulfat, Natriumhydroxid;
(c) thermisches Hydrolysieren des Gemisches gemäß Schritt (b) in einem Autoklaven bei Temperaturen zwischen 150 °C und 220 °C, bevorzugt zwischen 160 °C und 200 °C;
(d) Abkühlen des gemäß Schritt (c) hergestellten Hydrolysats;
(e) Neutralisieren des gemäß Schritt (d) abgekühlten Hydrolysats mit einer Säure, insbesondere Salzsäure, und gegebenenfalls Abtrennen von noch vorhandenen, nicht hydrolysierten Feststoffen durch Filtration.

10. Verfahren nach Anspruch 9, **gekennzeichnet durch** den weiteren Schritt:
(f) Eindampfen des gemäß Schritt (e) hergestellten Hydrolysats zum Herstellen eines Pulvers.

## Claims

1. Use of keratin hydrolysate as flame retardant,
which can be applied to a substrate as a covering or coating, in particular can be sprayed onto a surface of the substrate as a powder in dissolved form,
the flame retardant consisting of keratin hydrolysate, which consists essentially of polypeptides obtained from keratin materials.

2. Use of keratin hydrolysate as flame retardant according to claim 1, **characterized in that** the keratin material is formed from feathers, preferably bird feathers, particularly preferably plumage of land and/or water fowl such as goose or duck feathers, hair, hooves, horns and/or scales.

3. Use of keratin hydrolysate as flame retardant according to claim 2, **characterized in that** the bird feathers originate from used bedding and/or clothing fillings.

4. Use of keratin hydrolysate as flame retardant according to one of claims 1 to 3, **characterized in that** the polypeptides obtained are based on keratin materials hydrolyzed in water by means of an autoclave at temperatures between 150°C and 220°C, preferably between 160°C and 200°C.

5. Use of keratin hydrolysate as flame retardant according to one of claims 1 to 3, **characterized in that** the polypeptides obtained are based on keratin materials hydrolyzed in an aqueous solution of sodium sulfite, sodium hydrogen sulfite, sodium sulfate, sodium hydroxide by means of an autoclave at temperatures between 150°C and 220°C, preferably between 160°C and 200°C.

6. Use of keratin hydrolysate as flame retardant according to one of the preceding claims, **characterized in that** the flame retardant contains 0.5 to 95% by weight of polypeptides as covering or coating.

7. Use of keratin hydrolysate as flame retardant according to claim 4 or 5, **characterized in that** the flame retardant present as powder is prepared by evaporation of the hydrolysate.

8. Assembly of a flame retardant according to one of the preceding claims and a carrier material which is formed from a wood material, wood fiber material, building material, building product, textile material or textiles.

9. Method for preparing a flame retardant according to any one of the preceding claims, **characterized by** the following steps:
(a) grinding the keratin material to a particle size of about 200 µm to about 500 µm;
(b) mixing the keratin material ground according to step (a) with water or an aqueous solution of sodium sulfite, sodium hydrogen sulfite, sodium sulfate, sodium hydroxide;
(c) thermal hydrolysis of the mixture according to step (b) in an autoclave at temperatures between 150 °C and 220 °C, preferably between 160 °C and 200 °C;
(d) cooling the hydrolysate prepared according to step (c);
(e) neutralizing the hydrolysate cooled according to step (d) with an acid, in particular hydrochloric acid, and optionally separating off any remaining nonhydrolyzed solids by filtration.

10. Method according to claim 9, **characterized by** the further step:
(f) Evaporating the hydrolysate prepared according to step (e) to produce a powder.

## Revendications

1. Utilisation d'hydrolysat de kératine comme agent ignifuge, qui peut être appliqué sous forme d'enrobage ou de revêtement sur un matériau de support, en particulier sous la forme d'une poudre sous forme dissoute pouvant être pulvérisée sur une surface du matériau de support,
l'agent ignifuge étant constitué d'hydrolysat de kératine essentiellement constitué de polypeptides obtenus à partir de matières kératiniques.

2. Utilisation d'hydrolysat de kératine comme agent ignifuge selon la revendication 1, **caractérisée en ce que** la matière kératinique est formée de plumes, de préférence de plumes d'oiseaux, de manière particulièrement préférée de plumes de volailles terrestres et/ou aquatiques telles que des plumes d'oies ou de canards, de poils, de sabots, de cornes et/ou d'écailles.

3. Utilisation d'hydrolysat de kératine comme agent ignifuge selon la revendication 2, **caractérisée en ce que** les plumes d'oiseaux proviennent de literie usagée et/ou de rembourrages de vêtements.

4. Utilisation d'hydrolysat de kératine comme agent ignifuge selon l'une des revendications 1 à 3, **caractérisée en ce que** les polypeptides obtenus sont à base de matières kératiniques hydrolysées dans l'eau au moyen d'un autoclave à des températures comprises entre 150 °C et 220 °C, de préférence entre 160 °C et 200 °C.

5. Utilisation d'hydrolysat de kératine comme agent ignifuge selon l'une des revendications 1 à 3, **caractérisée en ce que** les polypeptides obtenus sont à base de matières kératiniques hydrolysées dans une solution aqueuse de sulfite de sodium, d'hydrogénosulfite de sodium, de sulfate de sodium, d'hydroxyde de sodium au moyen d'un autoclave à des températures comprises entre 150 °C et 220 °C, de préférence entre 160 °C et 200 °C.

6. Utilisation d'hydrolysat de kératine comme agent ignifuge selon l'une des revendications précédentes, **caractérisée en ce que** l'agent ignifuge sous forme d'enrobage ou de revêtement contient de 0,5 à 95 % en poids de polypeptides.

7. Utilisation d'hydrolysat de kératine comme agent ignifuge selon la revendication 4 ou 5, **caractérisée en ce que** l'agent ignifuge se présentant sous forme de poudre est préparé par évaporation de l'hydrolysat.

8. Agencement d'un agent ignifuge selon l'une des revendications précédentes et d'un matériau de support qui est formé d'un matériau à base de bois, d'un matériau à base de fibres de bois, d'un matériau de construction, d'un produit de construction, d'un matériau à base de textiles ou de textiles.

9. Procédé de préparation d'un agent ignifuge selon l'une des revendications précédentes, **caractérisé par** les étapes suivantes :
(a) broyage de la matière kératinique à une taille de particules d'environ 200 µm à environ 500 µm ;
(b) mélange de la matière kératinique broyée selon l'étape (a) avec de l'eau ou une solution aqueuse de sulfite de sodium, d'hydrogénosulfite de sodium, de sulfate de sodium, d'hydroxyde de sodium ;
(c) hydrolyse thermique du mélange selon l'étape (b) dans un autoclave à des températures comprises entre 150 °C et 220 °C, de préférence entre 160 °C et 200 °C ;
(d) refroidissement de l'hydrolysat préparé selon l'étape (c) ;
(e) neutralisation de l'hydrolysat refroidi selon l'étape (d) avec un acide, en particulier de l'acide chlorhydrique, et éventuellement séparation des matières solides non hydrolysées encore présentes par filtration.

10. Procédé selon la revendication 9, **caractérisé par** l'étape supplémentaire suivante :
(f) évaporation de l'hydrolysat préparé selon l'étape (e) pour produire une poudre.
